# DEMANDE DE BREVET EUROPEEN

(11) **EP 2 618 118 A1**
(43) Date de publication de la demande: **24.07.2013**
(21) Numéro de dépôt: 13151809.4
(22) Date de dépôt: 18.01.2013
(51) Int. Cl.: G01F 23/24

(54) **Dispositif et procede de detection du sur-remplissage d'un reservoir de gaz liquefie basse temperature**

(30) Priorité: 18.01.2012 FR 1250510
(71) Demandeur: Entrepose Projets, 92700 Colombes (FR)
(72) Inventeur: Delair, Franck, 92000 Nanterre (FR); Da Costa, Dominique, 94000 Creteil (FR)
(74) Mandataire: Regimbeau

(57) **Abrégé**

L'invention concerne selon son premier aspect, un dispositif de détection du sur-remplissage d'un réservoir de gaz liquéfié basse température, caractérisé en ce qu'il comporte une tête de mesure (1) comprenant au moins une sonde de température (2), la tête de mesure étant raccordée à un câble (3) apte à être entraîné pour faire passer la tête de mesure d'une première position où elle est disposée à l'extérieur du réservoir à une deuxième position où elle est disposée à l'intérieur du réservoir à hauteur d'un seuil de sur-remplissage (LSHH).

## Description

### DOMAINE DE L'INVENTION

Le domaine de l'invention est celui des réservoirs de gaz liquéfié basse température. L'invention concerne plus précisément un dispositif de détection du sur-remplissage d'un réservoir de gaz liquéfié basse température mettant en oeuvre une détection d'une température très basse à un niveau très haut à l'intérieur du réservoir pour ainsi stopper le sur-remplissage du réservoir.

### ARRIERE PLAN DE L'INVENTION

Un terminal méthanier réceptionne par voie maritime du Gaz Naturel Liquéfié (GNL), le re-gazéifie (transforme le GNL en gaz) et l'envoie dans le réseau de transport de gaz naturel. Afin de concilier une réception intermittente par bateau et une émission continue par pipeline, un stockage tampon est nécessaire. Il est réalisé par des réservoirs de stockage.

Un des événements redoutés sur un tel réservoir de stockage est le sur-remplissage qui se traduirait par un débordement du liquide dans l'inter-paroi. Bien que le réservoir soit conçu pour résister à ce scénario accidentel, les désordres qui en résulteraient nécessiteraient une longue mise hors service pour inspection et des travaux potentiellement importants et coûteux avant toute reprise d'opération. Cet événement doit donc être absolument évité.

Différentes mesures contribuent à réduire la probabilité de l'événement initiateur. Des mesures de maîtrise du risque (barrières techniques ou humaines) et des fonctions de sécurités associées à ces mesures permettent de minimiser les probabilités d'une telle catastrophe et sont imposées par les autorités. Il peut ainsi être exigé d'équiper les réservoirs d'un dispositif de détection d'un sur-remplissage mettant en oeuvre une détection d'une température très basse à un niveau très haut à l'intérieur du réservoir pour ainsi stopper le sur-remplissage du réservoir.

Un tel dispositif doit répondre à deux impositions particulières. Il doit tout d'abord être testable en conditions réelles et non pas par simulation, et cela sans pour autant faire monter le niveau dans le réservoir au niveau à détecter, ce qui produirait l'événement initiateur à éviter. Une maintenance doit en outre pouvoir être effectuée sur tous les éléments sensibles : ceci implique que le dispositif doit également être démontable alors que le réservoir est en service.

### EXPOSÉ DE L'INVENTION

L'invention a pour objectif de proposer un dispositif qui puisse répondre à ces impositions, tout en étant mécaniquement simple, facilement réalisable et utilisable.

A cet effet, l'invention propose un dispositif de détection du sur-remplissage d'un réservoir de gaz liquéfié basse température, caractérisé en ce qu'il comporte une tête de mesure comprenant au moins une sonde de température, la tête de mesure étant raccordée à un câble apte à être entraîné pour faire passer la tête de mesure d'une première position où elle est disposée à l'extérieur du réservoir à une deuxième position où elle est disposée à l'intérieur du réservoir à hauteur d'un seuil de sur-remplissage.

Certains aspects préférés, mais non limitatifs, de ce dispositif sont les suivants :
- il comporte un tube de guidage de la tête de mesure entre la première et la seconde position, le tube de guidage étant destiné à plonger dans le réservoir depuis l'extérieur du réservoir et se terminant en sa partie basse par une calotte percée pour permettre l'entrée de gaz liquéfié basse température depuis le réservoir en cas de sur-remplissage ;
- il comporte un tube d'amenée de gaz liquéfié basse température dans la calotte ;
- il comporte un tube d'amenée de gaz chaud dans le tube de guidage se terminant par au moins une bouche de soufflage agencée au niveau du seuil de sur-remplissage de manière à réaliser un apport calorique autour de l'au moins une sonde de température.

Selon un second aspect, l'invention concerne un procédé de détection du sur-remplissage d'un réservoir de gaz liquéfié basse température, caractérisé en ce qu'il consiste à détecter la basse température du gaz liquéfié au moyen de la tête de mesure du dispositif selon le premier aspect de l'invention.

### BREVE DESCRIPTION DES DESSINS

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels:
- la figure 1 illustre la partie haute d'un dispositif selon un mode de réalisation possible du premier aspect de l'invention ;
- la figure 2 illustre la partie intermédiaire et la partie basse d'un dispositif selon un mode de réalisation possible du premier aspect de l'invention ;
- la figure 3 illustre la partie basse d'un dispositif selon un mode de réalisation possible du premier aspect de l'invention en condition d'utilisation ;
- la figure 4 représente les bouches de soufflage du tube d'amenée de gaz chaud dans le tube de guidage dans un mode de réalisation possible du dispositif selon le premier aspect de l'invention , ainsi que les différents trous pratiqués dans la calotte formant partie basse du tube de guidage.

### DESCRIPTION DETAILLEE DE L'INVENTION

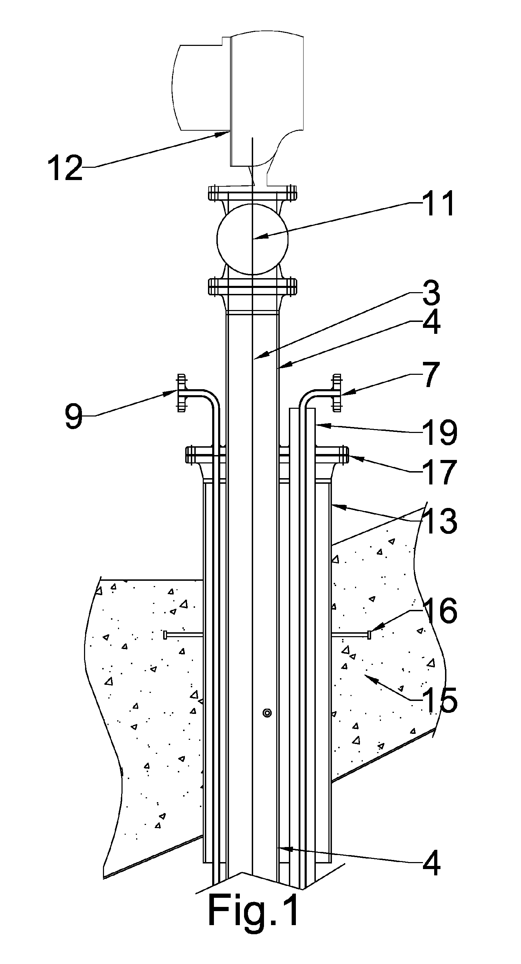

En référence aux figures 1 à 3, l'invention concerne dans son premier aspect un dispositif de détection du sur-remplissage d'un réservoir de gaz liquéfié basse température, par exemple du gaz naturel liquéfié (GNL).

Le dispositif comporte une tête de mesure 1 comprenant au moins une sonde de température 2, la tête de mesure étant raccordée à un câble 3 apte à être entraîné pour faire passer la tête de mesure d'une première position où elle est disposée à l'extérieur du réservoir à une deuxième position où elle est disposée à l'intérieur du réservoir à hauteur d'un seuil de sur-remplissage LSHH.

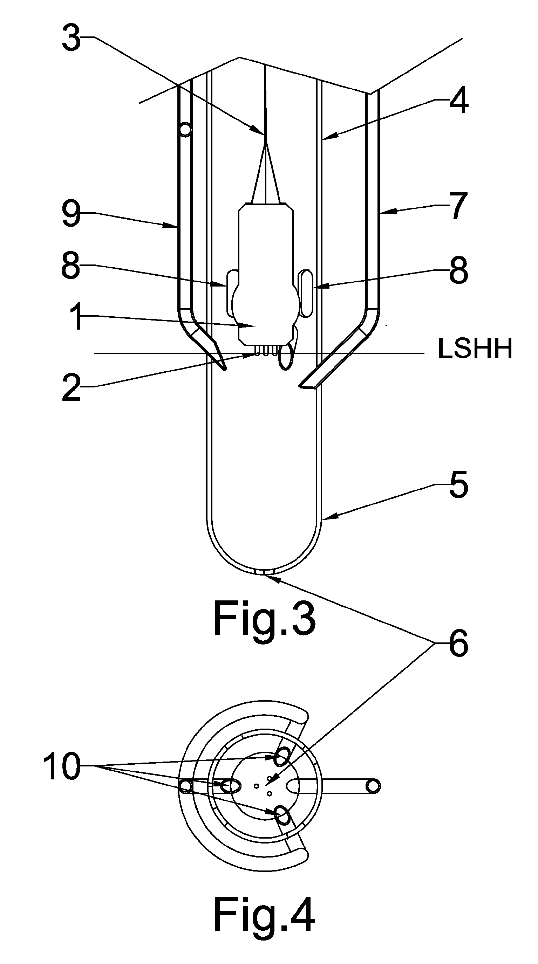

En référence à la figure 1, le câble 3 peut notamment être entraîné par un enrouleur, motorisé ou manuel, agencé au sein d'un logement 12, notamment un logement anti-déflagrant au sens de la réglementation ATEX, apte à accueillir la tête de mesure 1 lorsque celle-ci est dans sa première position. En référence à la figure 3, la longueur du câble 3 déroulé garantit la position de la tête de mesure 1, et donc de l'au moins une sonde de température 2, à hauteur du seuil de sur-remplissage LSHH. A titre d'exemple illustratif, il faut dérouler 8 mètres de câble pour amener la tête de mesure dans sa deuxième position.

De manière préférentielle, le câble peut non seulement supporter mécaniquement la tête de mesure, mais est également apte à véhiculer les informations récoltées par la tête de mesure (signaux de mesure de température). Un seul câble s'avère alors nécessaire.

La tête de mesure 1 peut notamment porter trois sondes de température 2, de type sonde platine 3 fils 100 ohms à 0°C. Ces sondes peuvent être changées en cas de besoin.

On relèvera que la fourniture d'un conditionnement composé du câble, de la tête de mesure équipée d'au moins une sonde de température permet une maintenance et une remise à disposition rapide des éléments de mesure.

En référence à la figure 1, le dispositif selon l'invention vient traverser une tubulure 13, par exemple une tubulure de 16", solidaire du dôme 15 du réservoir par exemple au moyen d'ancrages 16 (cf. figure 1). Cette tubulure 13 présente une bride 17 sur laquelle sont soudés :
- un tube de guidage 4 de la tête de mesure 1 entre la première et la seconde position, par exemple un tube de 6" ;
- un tube d'amenée de gaz liquéfié basse température 7, par exemple un tube de½";
- un tube d'amenée de gaz chaud 9, par exemple un tube de ½".

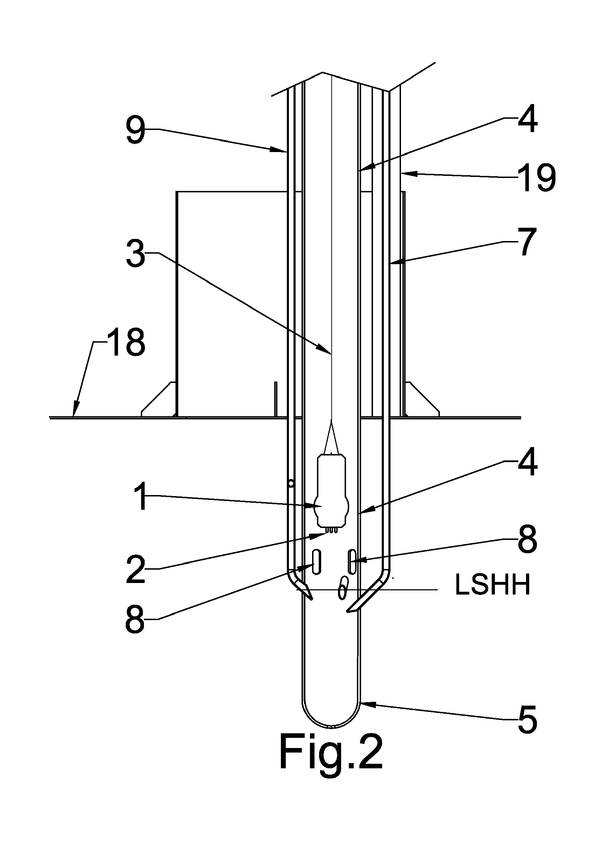

L'élément ainsi constitué traverse le toit suspendu 18 du réservoir, comme cela est représenté sur la figure 2.

Le tube de guidage 4 vient ainsi plonger dans le réservoir depuis l'extérieur du réservoir. Il se termine en sa partie basse, côté réservoir, par une calotte 5 percée pour permettre l'entrée de gaz liquéfié basse température depuis le réservoir en cas de sur-remplissage. Cette calotte 5 interdit par ailleurs la chute de la tête de mesure dans le réservoir.

Le tube d'amenée de gaz liquéfié basse température 7 s'étend le long du tube de guidage 4 et se termine à son extrémité inférieure, côté réservoir, par un déversoir traversant la paroi du tube de guidage 4 de sorte que le tube d'amenée de gaz liquéfié basse température 7 débouche dans la calotte 5 du tube de guidage, par exemple en dessous du seuil de sur-remplissage LSHH.

Le tube d'amenée de gaz liquéfié basse température 7 est relié à une vanne d'admission apte à être contrôlée pour permettre d'injecter du gaz liquéfié basse température servant de liquide de test dans la calotte via ledit tube d'amenée de gaz liquéfié à un débit supérieur au débit de fuite de la calotte percée. La calotte 5 se remplit alors de liquide de test. Le bon fonctionnement de la tête de mesure 1 peut ainsi être testé, et cela en conditions réelles sans pour autant faire monter le niveau dans le réservoir.

La calotte 5 du tube de guidage 4 est par exemple percée de trois orifices 6 comme cela est représenté sur la figure 4. Ces orifices permettent l'entrée du gaz liquéfié en cas de sur-remplissage du réservoir ainsi que l'écoulement par gravité du gaz liquéfié lors des tests. Une ouverture au moins 8 peut être pratiquée dans le tube de guidage 4 à un niveau supérieur au seuil de sur-remplissage LSHH de manière à permettre l'écoulement du gaz liquéfié en cas d'oubli de la fermeture de la vanne d'admission du tube 7 d'amenée de liquide de test.

La vanne d'admission peut notamment être agencée entre une canalisation de remplissage du réservoir et ledit tube 7 d'amenée de gaz liquéfié. On peut ainsi récupérer du gaz liquéfié sur un point bas de la canalisation de remplissage du réservoir. En ouvrant la vanne d'admission, on vient progressivement remplir la calotte du tube de guidage 4 jusqu'à ce que le liquide vienne en contact avec les sondes 2 de la tête de mesure, celles-ci venant alors détecter la chute de la basse température. On vient ensuite refermer la vanne d'admission et attendre que la température autour des sondes retrouve sa valeur initiale. Si la vanne n'est pas refermée assez rapidement, le gaz liquéfié de test monte au niveau de l'au moins une ouverture 8 et se déverse dans le réservoir, sans conséquence.

En référence aux figures 1 et 2, le tube d'amenée de gaz liquéfié basse température 7 est, pour toute sa partie située au-dessus du réservoir, logé dans un tube d'isolation thermique 19.

Le tube d'amenée de gaz chaud 9 s'étend également le long du tube de guidage 4 et se termine à son extrémité inférieure, côté réservoir, par au moins une bouche de soufflage 10, par exemple trois bouches de soufflage disposées à 120° les unes des autres comme représenté sur la figure 4. L'au moins une bouche de soufflage traverse la paroi du tube de guidage 4 au niveau du seuil de sur-remplissage LSHH, permettant ainsi de réaliser un apport calorique autour de l'au moins une sonde de température 2 portée par la tête de mesure 1.

Prenant l'exemple du GNL, en opération normale, la tête de mesure 1 se trouve dans la phase gazeuse du réservoir, dont la température peut varier de -160 à -120°C (environ). La température du gaz dans la partie haute du réservoir peut donc être très proche de la température du gaz liquéfié (GNL-160°C). Pour pouvoir détecter la présence éventuelle de celui-ci en cas de sur-remplissage, on vient générer en opération autour de la tête de mesure une température supérieure à celle du liquide pour pouvoir détecter. On vient pour cela injecter en permanence du méthane "gaz de service" disponible sur la plateforme du réservoir via le tube d'amenée de gaz chaud 9. Lors d'un sur-remplissage, le gaz liquéfié interrompt, ou tout du moins perturbe, l'arrivée du "gaz de service" et vient mouiller la tête de mesure : la température chute alors pour correspondre à la température du GNL ce qui permettra de détecter un niveau très haut du gaz liquéfié dans le réservoir.

Dans la partie haute «accessible» du dispositif selon l'invention, une vanne d'isolement 11 est agencée de manière à permettre d'isoler la tête de mesure 1 de l'atmosphère du réservoir lorsque la tête de mesure est dans sa première position. On a vu précédemment que l'enrouleur permet de remonter la tête de mesure. Une fois la tête de mesure disposée dans sa première position à l'intérieur du logement ATEX 12 de l'enrouleur, la vanne d'isolement 11 peut être fermée. Le volume de gaz se trouvant au-dessus de la vanne d'isolement 11 dans ce logement 12, n'étant pas en quantité suffisante pour générer une atmosphère explosive on peut donc avec les sécurités d'usage l'ouvrir et procéder aux vérifications souhaitées.

Les éléments sensibles sur lesquels une maintenance doit pouvoir être effectuée sont les sondes de températures, le câble de suspension et l'enrouleur. Le principe de remontée des éléments sensibles au-dessus de la vanne d'isolement permet le démontage pour maintenance sans contrainte.

Les autres éléments, en-dessous de la vanne, sont fixes, soudés (notamment pour éliminer tout risque de chute), non susceptibles de corrosion. Les pièces mécaniques, en dehors de l'enrouleur, sont par exemple en Inox 316L.

On retiendra par ailleurs que compte tenu de la propreté des fluides utilisés (GNL, azote en tant que gaz chaud), le risque de bouchage des tuyauteries ou des trous peut être écarté.

On retiendra également que l'invention n'est pas limitée au dispositif selon son premier aspect, mais s'étend également au procédé de détection d'un sur-remplissage mis en oeuvre avec un tel dispositif.

## Revendications

1. Dispositif de détection du sur-remplissage d'un réservoir de gaz liquéfié basse température, **caractérisé en ce qu'**il comporte une tête de mesure (1) comprenant au moins une sonde de température (2), la tête de mesure étant raccordée à un câble (3) apte à être entraîné pour faire passer la tête de mesure d'une première position où elle est disposée à l'extérieur du réservoir à une deuxième position où elle est disposée à l'intérieur du réservoir à hauteur d'un seuil de sur-remplissage (LSHH).

2. Dispositif selon la revendication 1, comportant un tube de guidage (4) de la tête de mesure (1) entre la première et la seconde position, le tube de guidage étant destiné à plonger dans le réservoir depuis l'extérieur du réservoir et se terminant en sa partie basse par une calotte (5) percée pour permettre l'entrée de gaz liquéfié basse température depuis le réservoir en cas de sur-remplissage.

3. Dispositif selon la revendication 2, comportant en outre un tube d'amenée de gaz liquéfié basse température (7) dans la calotte.

4. Dispositif selon la revendication 3, comportant une vanne d'admission apte à être contrôlée pour permettre d'injecter du gaz liquéfié basse température dans la calotte via ledit tube d'amenée de gaz liquéfié à un débit supérieur au débit de fuite de la calotte percée.

5. Dispositif selon la revendication 4, dans lequel la vanne d'admission est agencée entre une canalisation de remplissage du réservoir et ledit tube d'amenée de gaz liquéfié.

6. Dispositif selon l'une des revendications 3 à 5, dans lequel une ouverture au moins (8) est pratiquée dans le tube de guidage à un niveau supérieur au seuil de sur-remplissage.

7. Dispositif selon l'une des revendications 2 à 6, comportant en outre un tube d'amenée de gaz chaud (9) dans le tube de guidage se terminant par au moins une bouche de soufflage (10) agencée au niveau du seuil de sur-remplissage (LSHH) de manière à réaliser un apport calorique autour de l'au moins une sonde de température (2).

8. Dispositif selon l'une des revendications précédentes, comportant une vanne d'isolement (11) agencée de manière à permettre d'isoler la tête de mesure de l'atmosphère du réservoir lorsque la tête de mesure est dans sa première position.

9. Dispositif selon l'une des revendications précédentes, dans lequel le câble est entraîné par un enrouleur agencé au sein d'un logement anti-déflagrant (12) apte à accueillir la tête de mesure lorsque celle-ci est dans sa première position.

10. Dispositif selon l'une des revendications précédentes, dans lequel le câble est également apte à véhiculer les informations récoltées par la tête de mesure.

11. Procédé de détection du sur-remplissage d'un réservoir de gaz liquéfié basse température, **caractérisé en ce qu'**il consiste à détecter la basse température du gaz liquéfié au moyen de la tête de mesure du dispositif selon l'une quelconque des revendications précédentes.
